# EUROPEAN PATENT SPECIFICATION

(11) **EP 0 735 516 B1**
(45) Date of publication and mention of the grant of the patent: **02.06.2004**
(21) Application number: 96302038.3
(22) Date of filing: 25.03.1996
(51) Int. Cl.: G08C 19/28, G05D 23/19

(54) **Receiver for heating/cooling apparatus**
Empfänger für Heiz- oder Kühlvorrichtung
Récepteur pour appareil de chauffage ou de refroidissment

(30) Priority: 27.03.1995 GB 9506201
(43) Date of publication of application: 02.10.1996
(73) Proprietor: Invensys Controls UK Ltd, London, SW1P 1BX (GB)
(72) Inventor: Cottrell, Brian John, Woodley, Berkshire RG5 3HG (GB); Rowland, James Robert Arthur, Maidenhead, Berkshire SL6 7LF (GB)
(74) Representative: Badger, John Raymond

(56) References cited:
- EP-A- 0 268 902
- EP-A- 0 617 351
- EP-A- 0 618 097
- WO-A-92/15977
- DE-A- 4 242 231
- DE-A- 4 323 330
- FR-A- 2 644 918

## Description

The present invention relates to a method of programming, a receiver to respond only to one or more selected transmitter as claimed in the preamble of claim 1. The receiver may be arranged to operate a heating or cooling apparatus.

In a traditional central heating system, for example, a programmer or controller for operating the boiler is hard wired to thermostats and other control means such that the operation of the boiler can take into account ambient conditions. However, the need for hard wiring makes the system difficult and expensive to install. It also makes subsequent repositioning of thermostats difficult. It has been proposed to use radio frequency transmission links in such circumstances, but it is necessary to ensure the integrity of communication. In this respect, in a domestic environment, for example, it may be required to communicate a central heating programmer with more than one sensor device, such as a thermostat. In addition, the premises may include home entertainment systems, for example, also operating at radio frequencies, and having remote control devices. It is also important to ensure that operation of a heating system in one location cannot affect a heating or other system in an adjacent location. The situation might become most acute, for example, in a block of flats.

FR-A-2644918 discloses a method of programming a receiver to respond only to one or more selected transmitters, wherein each transmitter is caused to transmit command data arranged to control the operation of the receiver, the command data being incorporated in individual command messages which each include an identification code of the associated transmitter, and wherein the receiver is arranged to respond to the command data in a received command message only if it recognises the included identification code, the programming method comprising the steps of putting the receiver in a learning mode, and causing a selected transmitter to transmit its identification code to the receiver such that the receiver stores the identification code in memory.

The present invention seeks to provide a more secure method of programming a receiver.

According to the present invention, a method of programming as defined above is characterised as claimed in the characterising portion of claim 1.

As set out, in a method of the invention the storing of a received identification code in memory is only possible when the receiver has been placed in learning mode and a command message received by the receiver includes a learn code. When the identification code has been stored in memory the receiver exits the learning mode.

In a preferred embodiment, the transmitter identification code includes a random code fixed in the transmitter during manufacture. Preferably, the random code comprises at least twelve bits thereby providing 4096 combinations. In a preferred embodiment, the identification code also comprises a product type code. Preferably, the receiver is provided with switching means enabling its placement in the learning mode.

The method of the invention comprises the steps of causing the transmitter to unset the learn code after it has transmitted a limited number of command messages incorporating the learn code. The or each transmitter is arranged to set and transmit a learn code for a short time after power up. Thus, each transmitter may be arranged to transmit a package of three identical individual command messages in succession each including a learn code. Thereafter, the transmitter unsets the learn code so that it does not occur in subsequent transmissions.

By periodically repeating the command messages the chance that the receiver has received and interpreted the command data is enhanced. Furthermore, the repetition can be used to confirm to the receiver its operational status.

In one embodiment, for example, each individual command message is repeated three times. Thus, when command data is to be transmitted to the receiver, three identical command messages are transmitted in succession. This greatly increases the chances that the receiver will receive, and therefore be able to act upon, the command message.

Additionally and/or alternatively, the transmitter is arranged to send a command message, or a package of command messages, at intervals, for example once every five or six minutes. These intervals may be substantially regular or may be randomised. By sending command messages at intervals the receiver is regularly informed of the appropriate operational status. In an embodiment, the package of command messages may comprise a succession of individual command messages, preferably each command message of the package being the same. Thus, one package may comprise an individual command message repeated three times.

In a preferred embodiment, the receiver is arranged to generate an alarm if no command message is received within a predetermined period. For example, where command messages are to be transmitted every five minutes, the receiver may be arranged to provide an alarm if a new command message is not received within five or six minutes of the last received command message. Thus, there is an immediate indication if there has been a breakdown in communication between the transmitter and the receiver.

Preferably, each individual encoded command message includes command bits, to effect the operation of the receiver, packaged in the command message with protocol and check bits. The receiver is arranged to respond to, and act upon a command message only if the protocol and check bits are found by the receiver to be correct.

Each said command message includes an identification of the associated transmitter, and causes the receiver to respond to a command message only if it recognises the transmitter identification.

The receiver has stored in memory the identification of the or each transmitter from which it may receive command messages, and recognises the received transmitter identification if it is the same as an identification stored in its memory.

Ensuring that a receiver only responds to command messages from selected and identified transmitters ensures the integrity of the communication by making sure that the receiver does not respond to stray transmissions or transmissions from any adjoining premises, for example.

Embodiments of the present invention will hereinafter be described, by way of example, with reference to the accompanying drawings, in which:-
Figure 1 shows schematically one embodiment of a domestic central heating system using wireless communications,
Figure 2 shows a front view of a programmable thermostat for use in a system similar to that of Figure 1,
Figure 3 shows a front view of a receiver for use in the system of Figure 1, and
Figure 4 shows schematically the message protocol to be used in communication between the elements of the system of Figure 1.

The present invention is described herein with reference to a substantially conventional domestic central heating system in which a boiler is used to heat water. The heated water not only provides a supply of hot water, but also heats the premises in which the central heating system is installed. However, it should be noted that the reference to a central heating system of this type is by way of illustration only, and that not only is the present invention applicable to other sorts of central heating systems, it may also be used to control heating or cooling apparatus generally.

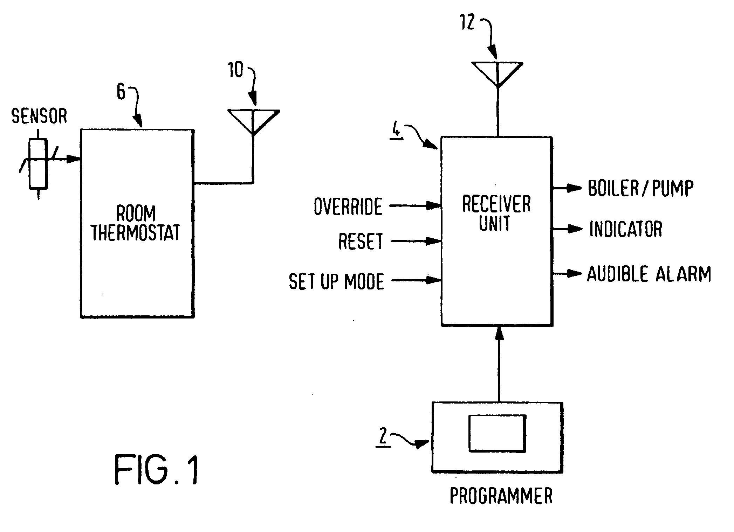

Figure 1 shows a simple control system for the conventional central heating system. The control for a boiler and pump (not shown) comprises a programmer 2 communicating with a receiver unit 4. The programmer 2 may be substantially conventional and will store details of the times at which the central heating system is required to be on or off, or at high or low levels. As is indicated in Figure 1, the receiver 4 has a number of outputs for controlling the boiler and pump (not shown) of the central heating system and for controlling a visual and/or audible indicators and alarms. The receiver 4 is in wireless communication with a room thermostat indicated at 6. This thermostat 6 may be used to set the temperature in a particular room to be heated by the system.

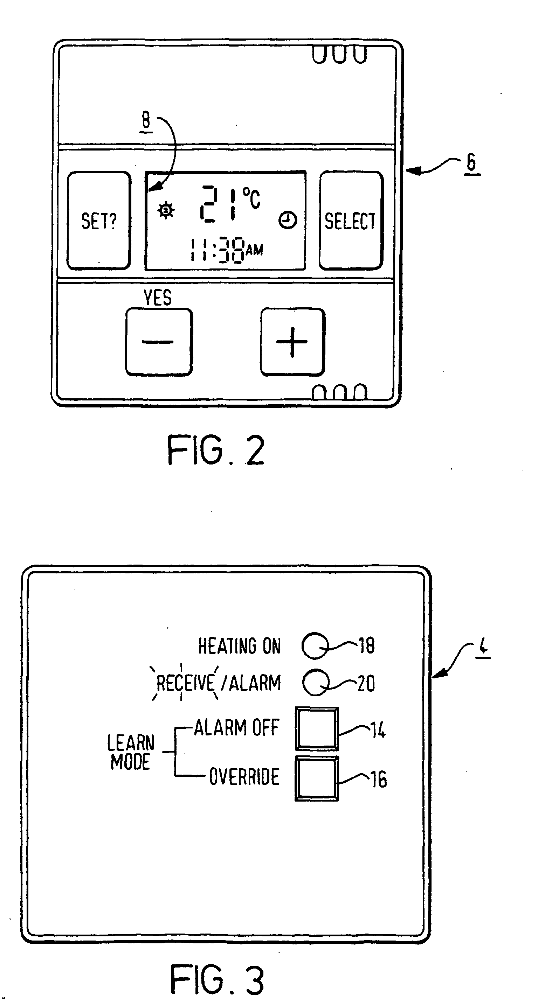

In the system illustrated in Figure 1, the required temperature is preset on the room thermostat 6 whilst timings are controlled by way of the programmer 2. Alternatively, the room thermostat 6 and programmer 2 may be replaced by a programmable thermostat which performs both functions and is programmable to require a variety of different temperatures at different times. Figure 2 shows a front view of a programmable thermostat 6 which, in known manner, may be preset to require a desired temperature, for example, 21°C, as is apparent on its display 8 shown in Figure 2. Either the room thermostat or the programmable thermostat might be mounted on a wall in a living room, may be substantially conventional in the manner in which it stores required temperatures, or required temperatures and times, and further details of the construction of the thermostat 6 in this respect are not given.

The room or programmable thermostat 6 functions as a transmitter and is provided with an antenna indicated at 10 (Figure 1) which is arranged to be in wireless communication with an antenna 12 of the receiver 4. Thus, the components 4 and 6 of the control system for the central heating system have the advantage over existing systems that they do not need to be hard wired together. This facilitates initial installation.

As is apparent in Figures 2 and 3, the antennas 10 and 12 are each received within the housing of the respective unit 6 and 4.

A front view of one embodiment of the receiver 4 is illustrated in Figure 3. As can be seen, the receiver 4 is provided with input buttons 14 and 16 as well as indicating means, for example LED's, 18 and 20. The button 16 of the unit 4 is an override button enabling the user to toggle the output if required. For example, the override button may enable the user to switch on the central heating system if there are transmission problems. The override button 16 may, if required, also be operable to enable the user to switch on the central heating system whilst it is maintained off by the receiver 4. This override button 16 is also helpful where it is wished to confirm the operation of the system.

The alarm off button 14 is used to reset the receiver 4 after an alarm has been indicated. The buttons 14 and 16 may also be actuated together to set the receiver into "learn" mode as will be described below.

The indicator means 18 is arranged to be illuminated when the receiver unit 4 has switched on the central heating system. It therefore provides confirmation to the user of the state of the system. The indicator means 20 may have two uses. For example, it may be pulsed on receipt of command messages by the receiver to confirm successful transmission. It may be illuminated continuously, for example, to signify an alarm condition.

In the system illustrated in Figure 1 the receiver 4 is shown receiving information from only a single transmitter, the thermostat 6. However, it will be appreciated that it may be required to have a single receiver as 4 receiving transmissions from a number of separate transmitters. For example, it may be preferred for the thermostat 6 to be a room thermostat and to have a programmer 2 configured as a separate hand held remote control unit, and to provide for transmissions to the receiver from more than one thermostat. Furthermore, it is required that the receiver unit not react to transmissions, for example, from neighbouring properties, or to other transmissions received on the premises, for example to radio or television receivers, or to other remote control devices. All this means that it is necessary to ensure the highest integrity of communication between the receiver 4 and any transmitters, as 6. The communication protocol is designed to ensure integrity and efficient data transfer and a number of measures are taken.

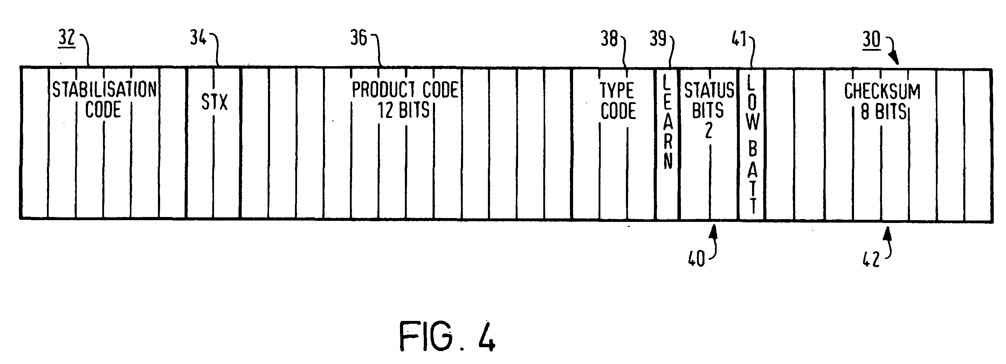

At present, the chosen frequency for the transmissions is within the band 417.9 to 418.1 MHz for the United Kingdom, and 433.72 to 434.12 MHz for Germany. Each transmitter, as 6, is arranged to transmit individual encoded command messages including the command data. In this respect, it is preferred that each encoded command message be Manchester encoded and incorporate various protocol and check bits. The format of each command message 30 is illustrated in Figure 4.

As can be seen in Figure 4, each command message 30 commences with a stabilisation code 32 of six bits. This is followed by a start code 34 which is a Manchester violation code and is equivalent to two bits. On receipt of the start code the receiver 4 is ready to receive data and the next data which arrives is a twelve bit product code 36 which acts as an individual identification code for the transmitter 6. This is followed by a three bit type code 38 which also acts to identify the transmitter. The next bit of the message 30, bit 39 is, when set, a learn bit. This learn bit 39 is followed by two bits 40 which are the status bits or command data. There is then a single bit 41 which, if set, provides a low battery warning. This low battery warning 41 is followed by check sum or parity bits 42.

The number of bits for each code can, of course, be chosen as necessary. For example, the number of command bits 40 may be increased if alternative and/or additional command data is to be transmitted.

For integrity of communication it is required that a receiver 4 only act on command data which is within a command message 30 transmitted by an identified transmitter, as 6. In this respect, a respective product code 36 is transmitted by each transmitter and is set on manufacture. It arises from a fixed twelve bit pattern in the transmitter and it will be appreciated that twelve bits provide 4096 possible combinations. Furthermore, the transmitter, as 6, also provides the three bit type code 38 which identifies the transmitter as a thermostat, cylinder thermostat, hand held remote control unit or programmer for example. The type code 38 therefore also acts to provide identification.

The twelve bit product code 36, and if required, the three bit type code 38, are fixed in the transmitter on manufacture. For example, these identification codes 36, 38 may be stored in any permanent memory device, such as a non-volatile memory. Alternatively, the identification codes 36, 38 may be fixed in a hardware configuration. In the illustrated embodiment, at least the twelve bit product code 36 is hard wired.

On installation of the system, for example, the receiver 4 is installed and set up and then the buttons 14 and 16 thereof are pressed to set the receiver 4 into the learn mode. Then the transmitter, as 6, is powered up. It is arranged that on power up, the transmitter 6 transmits a single learn bit 39 in the command message 30. If the receiver 4, whilst in the learn mode, receives a command message 30 with a set learn bit 39, and also receives the same product code 36 and the same type code 38 at least twice, the receiver 4 is arranged to put that product code 36 and the associated type code 38 in memory. Preferably, these identification codes 36 and 38 are set in non-volatile memory of the receiver 4, for example in EEPROM. The transmitter 6 is arranged to transmit the learn bit 39 only for a limited number of times on power up, for example, in the first three identical messages which are sent in succession. Thereafter, the learn bit 39 is unset, but can be reset again where new batteries are provided in the transmitter 6. Similarly, on recording the product code 36 and the type code 38 to memory, the receiver 4 exits the learn mode.

It is arranged that the receiver 4 only acts on command data received if it is contained within a command message 30 which carries both a product code 36 and a type code 38 the same as these codes stored in the receiver memory. Thus, the receiver unit 4 learns the identification of the or each transmitter 6 with which it is to communicate during initialisation. Thereafter, the receiver 4 rejects and fails to act on any spurious transmissions received from other sources.

In normal run mode, the or each transmitter 6 is arranged to transmit command messages 30 to the receiver unit 4 at intervals. In a preferred embodiment, each transmitter 6 sends three identical individual command messages 30 in succession at a first time interval, and then sends a further set of three command messages 30 at a second time interval which is preferably five or six minutes later than said first time interval. Packages of three individual command messages 30 continue to be sent at five or six minute intervals. It will be appreciated that if each command message 30 is repeated three times there is redundancy in the information provided and this aids in the efficiency of the data transfer.

In normal run mode, when the receiver 4 receives a command message 30 it first of all checks the check sum 8 which arrives after the command data 40 is received. In this respect, on receipt of the command message 30 the receiver calculates a check sum from the real data 40 and compares this against the transmitted check sum 42. If the two values agree, then the identification codes 36 and 38 are compared against the memory location in the receiver 4 containing the identification codes of the transmitter. If the identification codes transmitted match ones stored in memory, then the command message 30 is accepted and its command bits 40 are acted upon. This might require, for example, the receiver 4 to toggle output control signals to the boiler or pump on or off, or to sound an alarm and illuminate the indicating means as 20.

It may be that of the three identical command messages sent, the first is correctly received and acted upon. The following two messages may or may not be correctly received, but if they are received, the information they provide is the same as that acted upon so that no further action is necessary.

As soon as a command message 30 is received and acted upon, a timer (not shown) is set in the receiver 4. This timer begins to count, but is reset each time a command message 30 is received and acted upon. The timer is also reset where the receiver otherwise changes its output state, for example, in response to a manual override from the user. However, if the count exceeds a predetermined value, indicating that a transmission has not been received for a preset period, for example of five minutes, then the timer initiates an alarm. This may require illumination of the alarm LED 20 and, in addition, an audible alarm can be provided. In this respect, it is important that the transmitter 6 transmits a signal confirming its current status to the receiver at regular intervals, for example spaced by five minutes, as this guards against the receiver 4 causing erroneous operation of the boiler or pump, for example. Thus, the transmitter 6 is effectively confirming the required status of the apparatus controlled by the receiver at regular intervals, whereby it can be assured that the operation of the apparatus remains correct. This continual confirmation also has the important advantage that it enables monitoring of the effectiveness of the communication between the receiver 4 and the or each transmitter 6. Thus, and as described above, if the receiver 4 fails to receive an effective communication from an individual transmitter 6 within each five minute interval, it sets an alarm thereby revealing that there is a problem with the communication.

As described above, the command messages 30 as sent by the or each transmitter 6 may include a low battery bit 41. In this respect, it is preferred that each transmitter 6 be battery powered, to reduce the necessity for wiring and to improve the flexibility of the system. However, it is necessary to provide an indication of the state of the battery. It is particularly important to ensure that a situation cannot occur where the heating having been switched on cannot remain on because the signals to switch it off cannot be generated because of a battery failure. Thus, each transmitter 6 is provided with means (not shown) to monitor its battery condition and to set the low battery warning bit 41 when the power available falls below a predetermined level. On receipt of a command message 30 with a low battery warning 41, the receiver 4 initiates an alarm. This may be visual by way of the indicator 20 or audible or both. Where the receiver 4 is in communication with a number of transmitters, the low battery bit 41 received has, of course, been received in conjunction with the identification of the transmitter referred to. Means may therefore be provided for enabling the low battery alarm to be indicated together with the transmitter identification.

The receiver 4 may be arranged to respond to a low battery bit 41 in a staged and managed manner, for example, as described in our co-pending patent application No. 9422447.4. Thus, initial receipt of a low battery bit may be arranged to generate an alarm only at the receiver 4. At the same time, a timer of the receiver 4 may be activated and may be arranged to shut off the apparatus controlled by the receiver 4 a predetermined time, for example several days or weeks, after receipt of the low battery warning if the condition has persisted.

The methods and protocols for communication described above ought to ensure efficient, effective and correct communication. Thus there is redundancy in the information sent, the information has to be received from an identified transmitter, and the message protocol incorporates a check sum. Furthermore, the data transmitted is preferably Manchester encoded which minimises receiver misreads due to noise and to voltage level changes. However, even given all of these measures there is still a possibility of the receiver 4 receiving a command which it identifies as correct, but which incorporates corrupt data. To avoid corruption of the output in such circumstances, restrictions are placed on the ability of the receiver 4 to change the status of its output. Thus, when receiving and acting on command messages 30 the receiver 4 is arranged to set flags which confirm, for example, the operations it has performed. On receiving command data 40, the receiver 4 does not act thereon unless all of the appropriate flags have already been set. Furthermore, it can be provided that command data 40 effective to turn on or to turn off the heating system or other controlled apparatus has to be received twice before the receiver acts. In this way, spurious turn on or turn off of the controlled apparatus is avoided.

The invention has been described above with reference to one particular illustrated embodiment and with reference to a particular configuration in which a single receiver communicates with a single transmitter. However, it will be appreciated that variations and modifications may be made to the embodiments described and illustrated within the scope of the present invention.

## Claims

1. A method of programming a receiver to respond only to one or more selected transmitters, wherein each transmitter is caused to transmit command data arranged to control the operation of the receiver, the command data being incorporated in individual command messages which each include an identification code of the associated transmitter, and wherein the receiver is arranged to respond to the command data in a received command message only if it recognises the included identification code, the programming method comprising the steps of putting the receiver in a learning mode, and causing a selected transmitter to transmit its identification code to the receiver such that the receiver stores the identification code in memory,
the receiver being provided with switching means enabling its placement in the learning mode and the programming method being **characterized in** comprising the steps of:
the reception of these command messages causing the selected transmitter to set and transmit a learn code in the individual command messages for a short time after power up and to unset the learn code after it has transmitted a limited number of command messages incorporating the learn code;
causing the receiver when in the learning mode to store the identification code in received command messages incorporating the learn code such that the storing of a received identification code in memory is only possible both when the receiver is in the learning mode and a command message is received which includes a learn code, and
the storing of the identification code in memory causing the receiver to exit the learning mode.

2. A method as claimed in claim 1 and comprising causing the receiver to store the identification code only if the same identification code is received at least twice in the period between the learn code set and the learn code unset.

3. A method as claimed in claim 2, wherein each transmitter is arranged to transmit a package of three identical individual command messages in succession after power up, each command message including a learn code, and then the transmitter unsets the learn code so that it does not occur in subsequently transmitted command messages.

4. A method as claimed in any preceding claim, wherein the identification code incorporated within each command message comprises a random code fixed in the transmitter on manufacture.

5. A method as claimed in claim 4, wherein the identification code also comprises a product type code identifying the transmitter as a room thermostat, a tank thermostat, a temperature sensor, or a remote control unit.

6. A method as claimed in any preceding claim, wherein the receiver comprises two buttons and the receiver is placed in the learning mode by actuating said buttons together.

## Patentansprüche

1. Verfahren zum Programmieren eines Empfängers, um nur auf einen oder mehrere ausgewählte Sender anzusprechen, wobei jeder Sender veranlasst wird, Befehlsdaten zu übertragen, die zur Steuerung des Betriebs des Empfängers vorgesehen sind, wobei die Befehlsdaten in individuelle Befehlsmeldungen eingearbeitet sind, welche alle einen Identifikationscode des zugehörigen Senders enthalten, und wobei der Empfänger vorgesehen ist, auf die Befehlsdaten in einer empfangenen Befehlsmeldung nur dann anzusprechen, wenn dieser den enthaltenen Identifikationscode erkennt, wobei das Programmierverfahren die Schritte umfasst, den Empfänger in einen Lernmodus zu versetzen, und einen ausgewählten Sender zum Senden seines Identifikationscodes an den Empfänger zu veranlassen, so dass der Empfänger den Identifikationscode im Speicher speichert,
wobei der Empfänger mit einer Schalteinrichtung versehen ist, welche sein Setzen in den Lernmodus erlaubt und wobei das Programmierverfahren **dadurch gekennzeichnet ist, dass** es die Schritte umfasst:
den Empfang dieser Befehlsmeldungen,
Veranlassen des ausgewählten Senders, einen Lerncode in den individuellen Befehlsmeldungen für eine kurze Zeit nach dem Einschalten einzustellen und zu senden, und den Lerncode abzustellen, nachdem er eine begrenzte Anzahl von Befehlsmeldungen, in die der Lerncode eingearbeitet ist, gesendet hat;
Veranlassen des Empfängers, wenn dieser in dem Lernmodus ist, den Identifikationscode in empfangenen Befehlsmeldungen, in die der Lerncode eingearbeitet ist, zu speichern, derart, dass das Speichern eines empfangenen Identifikationscodes im Speicher nur möglich ist, wenn sowohl der Empfänger in dem Lernmodus ist als auch eine Befehlsmeldung empfangen wird, welche einen Lerncode enthält, und
das Speichern des Identifikationscodes im Speicher, welches den Empfänger veranlasst, den Lernmodus zu verlassen.

2. Verfahren gemäß Anspruch 1, umfassend das Veranlassen des Empfängers, den Identifikationscode nur zu speichern, wenn dieser Identifikationscode zumindest zweimal in dem Zeitabschnitt zwischen dem Einstellen des Lerncodes und dem Abstellen des Lerncodes empfangen wird.

3. Verfahren gemäß Anspruch 2, wobei jeder Sender vorgesehen ist, ein Paket von drei identischen, individuellen Befehlsmeldungen in Aufeinanderfolge nach dem Einschalten zu senden, wobei jede Befehlsmeldung einen Lerncode enthält, und der Sender dann den Lerncode abstellt, so dass er nicht in nachfolgend gesendeten Befehlsmeldungen auftritt.

4. Verfahren gemäß einem der vorhergehenden Ansprüche, wobei der Identifikationscode, der innerhalb jeder Befehlsmeldung eingearbeitet ist, einen Zufallscode umfasst, der in dem Sender bei der Herstellung festgelegt ist.

5. Verfahren gemäß Anspruch 4, wobei der Identifikationscode auch einen Produkttypcode umfasst, der den Sender als einen Raumthermostat, einen Tankthermostat, einen Temperatursensor, oder eine Femsteuerungseinheit identifiziert.

6. Verfahren gemäß einem der vorhergehenden Ansprüche, wobei der Empfänger zwei Knöpfe umfasst, und der Empfänger durch gemeinsames Betätigen der Knöpfe in den Lemmodus gesetzt wird.

## Revendications

1. Procédé de programmation d'un récepteur de sorte qu'il ne réponde qu'à un ou à plusieurs émetteurs sélectionnés, dans lequel chaque émetteur est amené à transmettre des données de commande agencées de façon à commander le fonctionnement du récepteur, les données de commande étant incorporées dans des messages de commande individuels dont chacun inclut un code d'identification de l'émetteur associé, et dans lequel le récepteur est agencé de façon à répondre aux données de commande d'un message de commande reçu uniquement s'il reconnaît le code d'identification inclus, le procédé de programmation comportant les étapes consistant à mettre le récepteur dans un mode apprentissage, et à amener un émetteur sélectionné à transmettre son code d'identification au récepteur d e telle s orte que le récepteur stocke le code d'identification en mémoire,
le récepteur étant doté de moyens de commutation permettant sa mise en mode apprentissage et le procédé de programmation étant **caractérisé en ce qu'**il comporte les étapes consistant :
en la réception desdits messages de commande amenant l'émetteur à sélectionné à sélectionner et à transmettre un code d'apprentissage dans les messages de commande individuels pendant une courte période suivant la mise sous tension et à désélectionner le code d'apprentissage après avoir transmis un nombre limité de messages de commande incorporant le code d'apprentissage ;
à amener le récepteur, lorsqu'il est en mode apprentissage, à stocker le code d'identification dans des messages de commande reçus incorporant le code d'apprentissage de telle sorte que le stockage en mémoire d'un code d'identification reçu ne soit possible que lorsque à la fois le récepteur se trouve en mode apprentissage et un message de commande qui comprend un code d'apprentissage est reçu ; et
en le stockage en mémoire du code d'identification amenant le récepteur à sortir du mode apprentissage.

2. Procédé selon la revendication 1, consistant à amener le récepteur à ne stocker le code d'identification que si ce même code d'identification est reçu au moins deux fois pendant la période qui intervient entre la sélection du code d'apprentissage et la désélection du code d'apprentissage.

3. Procédé selon la revendication 2, dans lequel chaque émetteur est agencé de façon à transmettre un paquet de trois messages de commande individuels identiques en succession après la mise sous tension, chaque message de commande incluant un code d'apprentissage, puis l'émetteur désélectionne le code d'apprentissage de sorte que celui-ci n'apparaisse pas dans des messages de commande transmis subséquemment.

4. Procédé selon l'une quelconque des revendications précédentes, dans lequel le code d'identification incorporé dans chaque message de commande comporte un code aléatoire fixé dans l'émetteur lors de la fabrication.

5. Procédé selon la revendication 4, dans lequel le code d'identification comporte également un code de type de produit identifiant l'émetteur comme thermostat d'ambiance, comme thermostat de réservoir, comme détecteur de température ou comme unité de télécommande.

6. Procédé selon l'une quelconque des revendications précédentes, dans lequel le récepteur comporte deux boutons et le récepteur est mis en mode apprentissage en actionnant lesdits boutons ensemble.
